# EUROPÄISCHE PATENTSCHRIFT

(11) **EP 0 732 255 B1**
(45) Veröffentlichungstag und Bekanntmachung des Hinweises auf die Patenterteilung: **06.05.1999**
(21) Anmeldenummer: 96102520.2
(22) Anmeldetag: 20.02.1996
(51) Int. Cl.: B62D 5/22

(54) **Servounterstützte Zahnstangengetriebeanordnung, insbesondere Zahnstangenlenkung**
Power-assisted rack and pinion gear, especially rack and pinion steering gear
Engrenage à pignon et crémaillère assisté, notamment direction à crémaillère

(30) Priorität: 13.03.1995 DE 19508981
(43) Veröffentlichungstag der Anmeldung: 18.09.1996
(73) Patentinhaber: DaimlerChrysler AG, 70567 Stuttgart (DE)
(72) Erfinder: Leher, Frank-Michael, 70794 Filderstadt (DE); Teutsch, Roman, 70376 Stuttgart (DE)

(56) Entgegenhaltungen:
- DE-A- 4 126 020
- DE-A- 4 303 854
- PATENT ABSTRACTS OF JAPAN vol. 017, no. 324 (M-1433), 21.Juni 1993 & JP 05 039051 A (TOYOTA MOTOR CORP), 19.Februar 1993,

## Beschreibung

Die Erfindung betrifft eine servounterstützte Zahnstangengetriebeanordnung, insbesondere Zahnstangenlenkung für Kraftfahrzeuge, mit einer verschiebbar geführten Zahnstange sowie einem damit kämmenden Ritzel, welches aufgrund beweglicher Anordnung bzw. Lagerung bei Übertragung von Kräften zwischen Zahnstange und Ritzel eine Schwenkung um eine quer zur Ritzelachse - vorzugsweise auch quer zur Zahnstangenachse - verlaufende (virtuelle) Schwenkachse ausführt und ein am Ritzel quer zur Schwenkachse erstrecktes, zusammen mit dem Ritzel schwenkendes Betätigungsorgan steuert, welches mit in einem stationären Gehäuse verschiebbaren Steuer- bzw. Ventilorganen der Servounterstützung antriebsmäßig zusammenwirkt.

Eine der Gattung entsprechende Zahnstangenlenkung für Kraftfahrzeuge ist aus 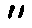 PATENTS ABSTRACTS OF JAPAN", M-1433, 1993, Vol. 17/No. 324 - JP 5-39051 (A) - bekannt. Dort ist an der Lagerschale des einen Lagers des beweglichen Ritzels ein Übertragungsgestänge angeordnet, welches die Ritzelbewegungen auf einen Ventilschieber eines Servoventils überträgt, das in einem vom Ritzel und der Zahnstange gesonderten Gehäuseteil untergebracht ist.

Bei einer aus der DE 43 03 854 A1 bekannten Zahnstangenlenkung für Kraftfahrzeuge ist das Ritzel am einen axialen Ende mittels eines Festlagers und am anderen axialen Ende mittels eines beweglichen Loslagers drehgelagert, so daß das Ritzel wiederum bei Übertragung von Kräften zwischen Zahnstange und Ritzel eine Schwenkung um eine sowohl zur Ritzelachse als auch zur Zahnstangenachse senkrechte virtuelle Achse im Bereich des Festlagers ausführt. Im Bereich des Loslagers sind seitlich neben dem Ritzel in einer zur Ritzelachse sowie zur Zahnstange etwa parallelen Ebene zwei Ventilpatronen in _{"}Boxeranordnung" angeordnet, wobei die Betätigungsorgane dieser Ventilpatronen mit Teilen des beweglichen Loslagers zusammenwirken. Je nach Schwenkrichtung und damit je nach Richtung der Kraftübertragung zwischen Ritzel und Zahnstange werden dann die Ventilpatronen in der einen oder anderen Richtung zur Steuerung eines hydraulischen Servomotors betätigt.

Bei diesen bekannten Konstruktionen ergibt sich im Bereich des Ritzels und der Servoventile eine vergleichsweise komplizierte Form der jeweiligen Gehäuseanordnungen, mit der Folge, daß vergleichsweise viel Raum zur Unterbringung sowie Freiraum zur Montage im Fahrzeug benötigt wird.

Dieses Problem kann auch mit einer Konstruktion gemäß der DE 30 43 968 C2 nicht ausgeräumt werden.

Diese Druckschrift bezieht sich auf eine als Drehventil ausgebildete Servoventilanordnung. Diese besitzt zwei zueinander koaxiale Wellenteile, die relativ zueinander begrenzt drehbar und miteinander durch eine Drehstabfeder verbunden sind, welche die Wellenteile in einer Mittellage relativ zueinander zu halten sucht. Am einen Wellenteil ist ein doppelarmiger Hebel mit zur Längsachse der Wellenteile senkrechter Schwenkachse angeordnet. Dieser doppelarmige Hebel greift mit einem Fortsatz in eine exzentrische Aussparung am anderen Wellenteil, derart, daß der doppelarmige Hebel bei Relativdrehung zwischen den Wellenteilen verschwenkt wird. Die freien Enden der Hebelarme betätigen dabei zwei im einen Wellenteil axial verschiebbar untergebracht Ventilschieber der Servoventilanordnung. Bei dieser bekannten Konstruktion ist einerseits die Betätigung der Ventilschieber konstruktiv vergleichsweise aufwendig. Andererseits muß weiterer Aufwand getrieben werden, um die von den Wellenteilen mitgedrehten Ventilelemente hydraulisch mit stationären Leitungen zu verbinden.

Deshalb ist es Aufgabe der Erfindung, eine vorteilhafte neue Konstruktion aufzuzeigen.

Diese Aufgabe wird erfindungsgemäß bei einer Anordnung der eingangs angegebenen Art dadurch gelöst, daß am Ritzel bzw. an der Ritzelwelle eine Scheibe oder Wippe angeordnet ist, welche die Schwenkbewegungen des Ritzels relativ zur Schwenkachse mitmacht und mit den Steuer- bzw. Ventilorganen zusammenwirkt, die als Ventilpatronen ausgebildet und im Gehäuse etwa parallel zur Ritzelachse untergebracht sind.

Die Erfindung beruht auf dem allgemeinen Gedanken, das Ritzel bzw. seine Achse mit seitlich vorspringenden Elementen zu versehen, die die Schwenkbewegungen des Ritzels mitmachen und damit im Bereich einer zur Schwenkachse senkrechten und zur Ritzelachse etwa parallelen Ebene bei Schwenkbewegungen des Ritzels eine Bewegungskomponente parallel zu einer der Normallage des Ritzels zugeordneten Mittelachse haben. Damit können in einem relativ stationären Gehäuse etwa parallel zur Ritzelachse verschiebbare Steuerorgane der Servounterstützung betätigt werden, wobei eine Anordnung dieser Steuerorgane in unmittelbarer Nachbarschaft der Ritzelachse ermöglicht wird, insbesondere lassen sich parallel zur Ritzelachse ausgerichtete Ventilpatronen einsetzen.

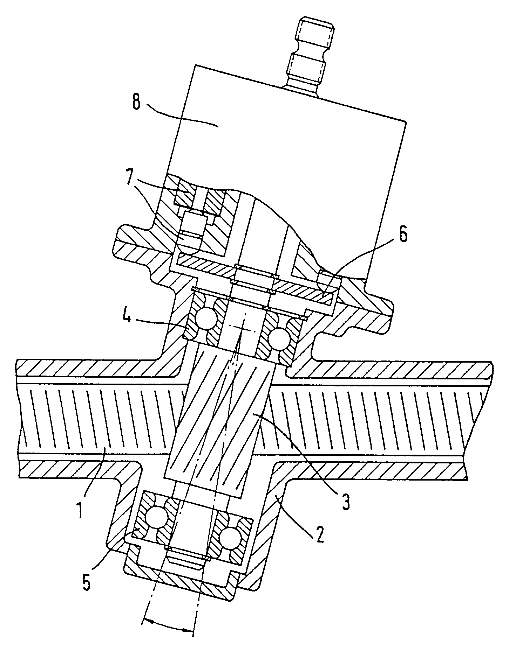

Im übrigen wird hinsichtlich bevorzugter Merkmale der Erfindung auf die Ansprüche sowie die nachfolgende Beschreibung einer vorteilhaften Ausführungsform verwiesen, die anhand der Zeichnung erläutert wird.

Dabei zeigt die einzige Figur ein Schnittbild einer erfindungsgemäß ausgebildeten Zahnstangenlenkung, wobei die Schnittebene parallel zur Ritzel- sowie zur Zahnstangenachse liegt.

Eine mit den nicht dargestellten Lenkrädern eines Fahrzeuges antriebsverbundene Zahnstange 1 ist innerhalb eines Gehäuses 2 verschiebbar gelagert, welches auch ein mit der Zahnstange 1 kämmendes Ritzel 3 aufnimmt. Das in der Zeichnung obere Ende der Ritzelwelle ist in grundsätzlich bekannter, nicht dargestellter Weise mit dem Lenkhandrad des Fahrzeuges verbunden, so daß Drehungen des Lenkhandrades in eine Verschiebung der Zahnstange 1 umgesetzt werden.

Das Ritzel 3 ist auf der dem Lenkhandrad zugeordneten Seite der Zahnstange 1 im Gehäuse 2 mittels eines als Kugellager ausgebildeten Festlagers 4 gelagert, welches eine Schwenkung des Ritzels um eine zur Zeichnungsebene senkrechte virtuelle Achse im Bereich des Festlagers 4 zuläßt. Auf der anderen Seite der Zahnstange 1 besitzt das Ritzel 3 ein Loslager 5, welches im Gehäuse 2 verschiebbar gelagert ist, derart, daß das Ritzel 3 um die vorgenannte Schwenkachse im Bereich des Festlagers 4 zu schwenken vermag.

Die Ritzelwelle durchsetzt eine Wippe 6, die an der Ritzelwelle axial unverschiebbar, jedoch relativ zur Ritzelwelle drehbar angeordnet ist. Diese Wippe 6 ist im Gehäuse 2 derart gehaltert bzw. geführt, daß sie die Drehungen des Ritzels 3 bzw. der Ritzelwelle nicht mitmacht, jedoch den Schwenkbewegungen des Ritzels 3 um die Schwenkachse im Bereich des Festlagers 4 zu folgen vermag. Zu diesem Zweck kann die Wippe 6 im Gehäuse 2 eine Gleit- oder Rollenlagerung aufweisen.

Die von der Ritzelwelle abstehenden Enden der Wippe 6 wirken mit im dargestellten Beispiel stößelartigen Betätigungselementen von Ventilpatronen 7 zusammen, welche dann je nach Schwenkrichtung der Wippe 6 bezüglich der Schwenkachse im Bereich des Festlagers 4 in der einen oder anderen Richtung betätigt werden. Die Ventilpatronen 7 sind innerhalb eines an das Gehäuse 2 angeflanschten Ventilgehäuses 8 etwa parallel zur Ritzelachse in unmittelbarer Nachbarschaft der Ritzelwelle angeordnet, so daß sich insgesamt eine kompakte Kontur ergibt.

Die dargestellte Anordnung arbeitet wie folgt:
Wird das Ritzel 3 in der einen oder anderen Richtung gedreht, so führt es eine mehr oder weniger starke Schwenkbewegung um die Schwenkachse im Bereich des Festlagers 4 aus. Das Maß der Schwenkbewegung hängt dabei vom Maß der zwischen Ritzel 3 und Zahnstange 1 übertragenen Kräfte ab. Die Richtung der Schwenkbewegung wird durch die Richtung der übertragenen Kräfte bestimmt. Die genannte Schwenkbewegung wird mittels der Wippe 6 auf die Ventilpatronen 7 übertragen, so daß dieselben je nach Richtung der zwischen Zahnstange 1 und Ritzel 3 übertragenen Kräfte in die eine oder andere Richtung gesteuert werden, wobei das Maß des Steuerhubes vom Maß der zwischen Zahnstange 1 und Ritzel 3 übertragenen Kräfte abhängt. Dementsprechend kann über die Ventilpatronen 7 ein nicht näher dargestellter fluidischer, insbesondere hydraulischer Servomotor analog zur Verstellung der Ventilpatronen 7 gesteuert werden.

Abweichend von der dargestellten Ausführung kann anstelle der relativ zur Ritzelachse im Gehäuse 2 undrehbar gehalterten Wippe 6 am Ritzel 3 bzw. an der Ritzelwelle eine Kreisscheibe drehfest angeordnet sein, an der die Betätigungsstößel od.dgl. der Ventilpatronen 7 gleitend anliegen. Damit können die Ventilpatronen 7 ebenfalls in der oben beschriebenen Weise betätigt werden.

## Patentansprüche

1. Servounterstützte Zahnstangengetriebeanordnung, insbesondere Zahnstangenlenkung für Kraftfahrzeuge, mit einer verschiebbar geführten Zahnstange (1) sowie einem damit kämmenden Ritzel (3), welches aufgrund beweglicher Anordnung bzw. Lagerung bei Übertragung von Kräften zwischen Zahnstange und Ritzel eine Schwenkung um eine quer zur Ritzelachse - und vorzugsweise auch quer zur Zahnstangenachse - verlaufende Schwenkachse ausführt und ein am Ritzel quer zur Schwenkachse erstrecktes, zusammen mit dem Ritzel schwenkendes Betätigungsorgan (6) steuert, welches mit in einem stationären Gehäuse (8) verschiebbaren Steuer- bzw. Ventilorganen einer Servounterstützung seinrichtung antriebsmäßig zusammenwirkt,
**dadurch gekennzeichnet,**
daß am Ritzel (3) bzw. an der Ritzelwelle eine als Betätigungsorgan dienende Scheibe oder Wippe (6) angeordnet ist, welche die Schwenkbewegungen des Ritzels (3) relativ zur Schwenkachse mitmacht und mit den Steuer- bzw. Ventilorganen (7) zusammenwirkt, die als Ventilpatronen ausgebildet und im Gehäuse (8) etwa parallel zur Ritzelachse untergebracht sind.

2. Anordnung nach Anspruch 1,
**dadurch gekennzeichnet,**
daß die Wippe (6) mittels Gleit- oder Rollenlagerung in einem dem Ritzel (3) zugeordneten Gehäuseteil (2,8) relativ zur Ritzelachse undrehbar gehaltert und am Ritzel (3) bzw. an der Ritzelwelle drehbar, jedoch taumelfest gelagert ist.

3. Anordnung nach Anspruch 1,
**dadurch gekennzeichnet,**
daß am Ritzel (3) bzw. an der Ritzelwelle eine drehfeste Kreisscheibe angeordnet ist, die mit ihrer einen Stirnseite mit den Steuer- bzw. Ventilorganen (7) zusammenwirkt.

## Claims

1. A servo-assisted rack-and-pinion arrangement, in particular rack-and-pinion steering for motor vehicles, having a slidable, guided rack (1) and a pinion (3) meshing therewith which, because of a moveable arrangement or mounting, swivels about a swivel axis extending transversely to the pinion axis - and preferably also transversely to the rack axis - when forces are transmitted between rack and pinion, and controls an actuating member (6) on the pinion which extends transversely to the swivel axis and swivels with the pinion and which co-operates with control or valve members, slidable in a stationary housing (8), of a servo-assist system for transmission purposes,
**characterised in that**
arranged on the pinion (3) or on the pinion shaft and serving as an operating member is a disc or rocker (6), which swivels with the swivelling movements of the pinion (3) relative to the swivel axis and co-operates with the control or valve members (7), which are provided in the form of valve units and are arranged in the housing (8) substantially parallel with the pinion axis.

2. An arrangement as claimed in claim 1,
**characterised in that**
the rocker (6) is unrotatably retained in a part of the pinion (3) housing (2, 8) relative to the pinion axis by means of a slide or roller bearing and mounted so that it is rotatable on the pinion (3) or pinion shaft but is prevented from wobbling.

3. An arrangement as claimed in claim 1,
**characterised in that**
arranged on the pinion (3) or pinion shaft so that it does rotate is a collar which co-operates by means of its one end-face with the control or valve members (7).

## Revendications

1. Engrenage à pignon et crémaillère assisté, en particulier direction à crémaillère destinée à des véhicules automobiles, avec une crémaillère (1) guidée de façon à pouvoir coulisser ainsi qu'avec un pignon (3) s'engrenant avec celle-ci et qui, du fait de l'agencement mobile, respectivement du tourillonnement, lors de la transmission d'efforts entre la crémaillère et le pignon, effectue un pivotement autour d'un axe de pivotement s'étendant transversalement par rapport à l'axe de pignon - et de préférence également transversalement par rapport à l'axe de crémaillère - et commande un organe d'actionnement (6) s'étendant sur le pignon transversalement par rapport à l'axe de pivotement, pivotant conjointement avec le pignon, qui coopère en entraînement avec des organes de commande, respectivement à soupape, déplaçables dans un boîtier (8) stationnaire, d'un dispositif d'assistance, caractérisé en ce que sur le pignon (3), respectivement sur l'arbre de pignon, est disposé un disque ou un organe basculant (6), servant d'organe d'actionnement, qui effectue conjointement les mouvements de pivotement du pignon (3) par rapport à l'axe de pivotement et coopère avec les organes de commande, respectivement à soupape (7), qui sont réalisés sous forme de cartouches de soupape et logés dans le boîtier (8) à peu près parallèlement à l'axe de pignon.

2. Engrenage selon la revendication 1, caractérisé en ce que l'organe basculant (6) est maintenu bloqué en rotation par rapport à l'axe de pignon, au moyen d'un palier à glissement ou à rouleaux, dans une partie de boîtier (2, 8) associée au pignon (3) et est monté de façon à pouvoir tourner sur le pignon (3), respectivement sur l'arbre de pignon, cependant en étant bloqué en nutation.

3. Engrenage selon la revendication 1, caractérisé en ce que sur le pignon (3), respectivement sur l'arbre de pignon, est disposé un disque circulaire assujetti en rotation, coopérant par une de ses faces frontales avec les organes de commande, respectivement à soupape (7).
